# EUROPÄISCHE PATENTSCHRIFT

(11) **EP 3 299 613 B1**
(45) Veröffentlichungstag und Bekanntmachung des Hinweises auf die Patenterteilung: **08.01.2020**
(21) Anmeldenummer: 17190853.6
(22) Anmeldetag: 13.09.2017
(51) Int. Cl.: F03D 1/06

(54) **ROTORBLATT MIT ABSCHLUSSSTEG**
ROTOR BLADE WITH TERMINATION FLANGE
PALE DE ROTOR AYANT UN ÉLÉMENT DE LIAISON D'EXTRÉMITÉ

(30) Priorität: 22.09.2016 DE 102016011757
(43) Veröffentlichungstag der Anmeldung: 28.03.2018
(73) Patentinhaber: Senvion GmbH, 22297 Hamburg (DE)
(72) Erfinder: BENDEL, Urs, 24787 Fockbek (DE); WERNER, Markus, 24242 Felde (DE); RAMM, Julian, 24105 Kiel (DE); ZELLER, Lenz, 24242 Felde (DE); EYB, Enno, 24116 Kiel (DE); ASMUSSEN, Clemens, 24242 Felde (DE)
(74) Vertreter: Groth, Wieland

(56) Entgegenhaltungen:
- CN-A- 104 696 167
- DE-A1- 3 014 347
- DE-A1-102011 082 664
- DE-A1-102014 203 936

## Beschreibung

Die Erfindung betrifft ein Rotorblatt für eine Windenergieanlage mit einem Hinterkantenabschlusssteg, der zwischen einer saugseitigen und einer druckseitigen Rotorblatthalbschale angeordnet ist. Die Erfindung betrifft auch ein Verfahren zur Herstellung eines Rotorblattes mit einem Hinterkantenabschlusssteg einer Windenergieanlage.

Rotorblätter mit Hinterkantenabschlussstegen sind beispielsweise aus der DE 10 2014 203 936 A1 im Stand der Technik bekannt. Grundsätzlich haben die Hinterkantenabschlussstege die Funktion, die Festigkeit von Rotorblättern im Bereich der Hinterkante zu erhöhen. Hinterkantenabschlussstege werden insbesondere im wurzelnahen Bereich des Rotorblattes vorgesehen. Insbesondere der wurzelnahe Bereich des aerodynamischen Abschnitts des Rotorblattes ist hohen Belastungen ausgesetzt, und damit sind auch die Übergänge zwischen Hinterkantenabschlusssteg und den Rotorblatthalbschalen hohen Belastungen ausgesetzt.

Es ist daher Aufgabe der vorliegenden Erfindung, ein Rotorblatt mit einem Hinterkantenabschlusssteg zur Verfügung zu stellen, das eine höhere Festigkeit im Bereich des Übergangs vom Hinterkantenabschlusssteg zur Rotorblatthalbschale aufweist, und es ist in einem zweiten Aspekt die Aufgabe der Erfindung, ein Verfahren zur Herstellung eines solchen Rotorblattes zur Verfügung zu stellen.

Die Aufgabe wird in ihrem ersten Aspekt durch ein Rotorblatt mit den Merkmalen des Anspruchs 1 gelöst, bevorzugte Weiterbildungen sind Gegenstand der Unteransprüche.

Das erfindungsgemäße Rotorblatt zeichnet sich dadurch aus, dass der Hinterkantenabschlusssteg als Laminatbauteil in einer Sandwichbauweise ausgebildet ist, mit einem ersten Kernmaterial, das eine erste spezifische Dichte aufweist, und einem sich entlang eines Übergangsbereiches zwischen Abschlusssteg und Rotorblatthalbschale angeordneten zweiten Kernmaterial, das eine zweite spezifische Dichte aufweist, und die zweite spezifische Dichte ist größer als die erste spezifische Dichte.

Die Angabe der spezifischen Dichte bezieht sich hier und auch im Folgenden auf das Kernmaterial vor der Laminierung, d. h. bevor dem Kernmaterial ein Harzsystem zugeführt wurde.

Bei dem ersten und zweiten Kernmaterial handelt es sich insbesondere um erste und zweite Schäume, die während des Laminierverfahrens durch beispielsweise Vakuuminfusion Harzsysteme aufnehmen. Dadurch wird die Dichte des Verbundes aus Harzsystem und Schaum natürlich größer als die spezifische Dichte des aufgeschäumten Schaumes allein.

Die Erfindung macht von der Idee Gebrauch, die Sandwichbauweise für den Hinterkantenabschlusssteg beizubehalten. Bei der Sandwichbauweise sind eine Innen- und eine Außenhaut vorgesehen, die eine oder mehrere Gewebe- und/oder Gelegelagen aufweisen können. Zwischen der Innen- und der Außenhaut ist das Kernmaterial, aufweisend vorzugsweise bestehend aus z. B. synthetischen Schäumen, Balsaholz oder wabenförmigen Material, angeordnet, das als ein sich über die gesamte Dicke zwischen der Innen- und Außenhaut des Hinterkantenabschlussstegs erstreckender, homogener Schaum ausgebildet sein kann. Es ist jedoch auch denkbar, dass das Kernmaterial entlang der Höhe des Abschlusssteges variiert und unterschiedliche Kernmaterialien verwendet werden.

Erfindungsgemäß variiert das Kernmaterial hinsichtlich seiner spezifischen Dichte entlang der Höhe des Abschlussstegs, indem die zweite spezifische Dichte eines zweiten Schaumes, der entlang des Übergangsbereiches zwischen Hinterkantenabschlusssteg und Rotorblatthalbschale vorgesehen ist, größer gewählt ist als die erste spezifische Dichte eines ersten Schaumes. Vorzugsweise ist entlang des gesamten Übergangsbereiches in Längsrichtung des Rotorblattes zwischen Hinterkantenabschlusssteg und Rotorblatthalbschale das zweite Kernmaterial vorgesehen. Auch das zweite Kernmaterial ist Bestandteil des Kernmaterials des Hinterkantenabschlussstegs, es berührt daher im Sandwich das erste Kernmaterial, und es berührt die Rotorblatthalbschale, insbesondere ein Kernmaterial, Gelegelagen oder einen Hinterkantengurt der Rotorblatthalbschale.

Unter Rotorblatthalbschale ist hier die saugseitige und/oder die druckseitige Rotorblatthalbschale eines Rotorblattes zu verstehen. Dabei ist es nicht notwendig, dass die beiden Rotorblatthalbschalen entweder mit oder ohne einen Teil des Hinterkantenabschlussstegs in jeweils einem separaten Laminierverfahren hergestellt werden. Es ist auch denkbar, dass die Rotorblattschale in einem Querschnitt senkrecht zur Längsrichtung, zumindest in Längsrichtung abschnittsweise einstückig hergestellt wird und entlang der Nase der Rotorblattschale keine in Längsrichtung verlaufende Klebelinie vorhanden ist.

Es ist jedoch bevorzugt vorgesehen, dass die Rotorblatthalbschalen mit Teilen des Abschlusssteges in jeweils separaten Laminierverfahren zunächst einzeln hergestellt werden und anschließend zusammengeklebt werden.

Die Verwendung von Kernmaterialien unterschiedlicher spezifischer Dichte entlang der Höhe des Hinterkantenabschlussstegs erhöht die Festigkeit des Rotorblattes im Übergangsbereich zwischen Hinterkantenabschlusssteg und Rotorblatthalbschale beträchtlich.

Vorzugsweise hat die zweite spezifische Dichte einen Wert von größer als 200 kg/m³, besonders bevorzugt hat sie einen Wert von größer als 300 kg/m³.

Die erste spezifische Dichte liegt bei der Verwendung von PVC-Schaum günstigerweise bei einem Wert von 60 kg/m³, bei der Verwendung von PET-Schaum bei ca. 100 kg/m³, wobei in beiden Fällen Toleranzen von ± 20 kg/m³ oder auch noch größere Toleranzen mitumfasst sind.

Durch den großen Unterschied in den spezifischen Dichten bleibt das Rotorblatt zum einen noch relativ kostengünstig herstellbar, da Schäume mit geringer spezifischer Dichte grundsätzlich billiger in der Anschaffung sind als Schäume mit hoher spezifischer Dichte. Dennoch ist die Festigkeit erhöht, da gerade in dem stark beanspruchten Übergangsbereich der stabilere Schaum mit der zweiten spezifischen Dichte vorgesehen ist.

Vorzugsweise bestehen das erste und/oder das zweite Kernmaterial aus Schäumen, da Schäume leicht und einfach als Kernmaterial einer Sandwichbauweise verarbeitet werden können.

Vorzugsweise ist zusätzlich vorgesehen, dass die Dicke des Hinterkantenabschlussstegs von einem mittleren Bereich, in dem sich das erste Kernmaterial befindet, in einen Übergangsbereich, in dem sich das zweite Kernmaterial befindet, vorzugsweise stetig zunimmt. Durch die dickere Ausführung des Hinterkantenabschlussstegs im Übergangsbereich wird weitere Festigkeit erzielt.

In einer besonders bevorzugten Ausführungsform der Erfindung ist an einer Innenseite des Rotorblattes entlang des Übergangsbereiches zwischen Rotorblatthalbschale und Hinterkantenabschlusssteg mindestens bereichsweise eine Innenleiste mit einem dritten Kernmaterial mit einer dritten spezifischen Dichte vorgesehen, die mit der Rotorblatthalbschale und dem Hinterkantenabschlusssteg zusammenlaminiert ist. Die Innenleiste wird insbesondere in dem Bereich des Hinterkantenabschlussstegs angebracht, in dem der Winkel zwischen dem Hinterkantenabschlusssteg und der Rotorblatthalbschale zwischen 130° und 90° liegt. Es hat sich gezeigt, dass durch Aufbringung einer im Querschnitt vorzugsweise in etwa dreieckförmigen, leistenartigen Schicht direkt an der Kontaktlinie zwischen Rotorblatthalbschale und Hinterkantenabschlusssteg die Festigkeit des Übergangsbereiches noch einmal erhöht wird, insbesondere wenn die Innenleiste aus einem dritten Kernmaterial mit einer dritten spezifischen Dichte besteht, die einen gleichen oder vorzugsweise höheren Wert als die zweite spezifische Dichte aufweist. Das Kernmaterial der Innenleiste kann ebenfalls ein Schaum mit einer besonders hohen spezifischen Dichte sein, es kann sich jedoch auch um eine bereits im Wesentlichen ausgehärtete oder vorgehärtete Epoxidharzleiste handeln, die vor dem Laminiervorgang innen in die Rotorblatthalbschale eingelegt wird.

Es ist zweckmäßigerweise vorgesehen, zusätzlich oder anstatt der Innenleiste an einer Außenseite des Rotorblattes entlang des Übergangsbereiches, vorzugsweise direkt an einer Kontaktlinie zwischen Rotorblatthalbschale und Hinterkantenabschlusssteg, eine Außenleiste mit einer vierten spezifischen Dichte anzuordnen, wobei die vierte spezifische Dichte vorzugsweise höher als die erste, zweite und dritte spezifische Dichte ist. Insbesondere die Außenleiste kann aus einer ausgehärteten oder vorgehärteten Epoxidharzleiste bestehen, die in eine sich beim Aufeinandertreffen des Kernmaterials und der Rotorblattaußenhaut ausbildende, im Querschnitt zur Längsrichtung dreiecksförmige Aussparung angepasst ist.

Die Innen- und/oder Außenleisten werden zusammen mit dem Kernmaterial des Hinterkantenabschlussstegs und dem Kernmaterial der Rotorblatthalbschale mit einer gemeinsamen Innen- bzw. Außenhaut überzogen.

Insbesondere der zusätzliche Einbau von Innen- und Außenleisten erzeugt eine nochmals erhöhte Festigkeit des Rotorblattes.

Die Erfindung wird in ihrem zweiten Aspekt durch ein Verfahren mit den Merkmalen des Anspruchs 9 gelöst, indem in einem sich vorzugsweise entlang einer Rotorblatthalbschalenhinterkante erstreckenden Übergangsbereich zwischen Hinterkantenabschlusssteg und Rotorblatthalbschale ein zweites Kernmaterial mit einer zweiten spezifischen Dichte angeordnet wird und entlang des zweiten Kernmaterials auf einer der Rotorblatthalbschale gegenüberliegenden Seite ein erstes Kernmaterial mit einer ersten spezifischen Dichte angeordnet wird und die zweite spezifische Dichte größer als die erste spezifische Dichte gewählt wird und das erste und das zweite Kernmaterial mit einem Harzsystem infundiert werden.

In dem Verfahren wird nicht notwendigerweise der komplette Hinterkantenabschlusssteg in einem Stück gefertigt, sondern es kann ein Teil des Hinterkantenabschlussstegs an jeder der beiden Rotorblatthalbschalen gefertigt werden.

Vorzugsweise werden die Rotorblatthalbschalen separat gefertigt und eine saug- und eine druckseitige Rotorblatthalbschale mit Hinterkantenabschlusssteg miteinander verbunden. Es ist jedoch auch denkbar, dass die Rotorblattschale einstückig oder zumindest in Längsrichtung gesehen abschnittsweise einstückig oder als nasenseitige Halbschale und hinterkantenseitige Halbschale gefertigt wird.

Vorzugsweise werden separat gefertigte saug- und druckseitige Rotorblatthalbschalen mit einem Hinterkantenabschlusssteg miteinander verbunden.

Zweckmäßigerweise werden zunächst in eine Formhalbschale Außenlagen und Innenlagen, das erste und zweite Kernmaterial des Hinterkantenabschlussstegs sowie die Innenleiste gelegt. Dadurch wird insbesondere der Übergangsbereich durch eine durchgehende Innen- und Außenhaut stabilisiert.

Der Hinterkantenabschlusssteg wird günstigerweise in einer Sandwichbauweise gefertigt. Ebenso kann die Rotorblatthalbschale in einer Sandwichbauweise gefertigt sein, wobei das Kernmaterial der Rotorblatthalbschale ebenfalls aus einem Schaum oder mehreren Schäumen bestehen kann. Es ist jedoch auch denkbar, dass die Rotorblatthalbschale entlang ihrer Dicke vollständig aus Gewebe- und/oder Gelegelagen aufgebaut ist. Vorzugsweise ist jedoch vorgesehen, dass entlang der Hinterkante der Rotorblatthalbschale ein Hinterkantengurt verläuft, der eine höhere Festigkeit, insbesondere Zugfestigkeit in Längsrichtung aufweist und die Biegesteifigkeit und auch die Beulsteifigkeit des Rotorblattes dadurch erhöht werden.

Der Hinterkantengurt kann als separates Bauteil vorgefertigt und dann in die Rotorblatthalbschale eingefügt werden, es ist jedoch auch denkbar, die Halbzeuge, aus denen der Hinterkantengurt besteht, zusammen mit den Halbzeugen, aus denen die Rotorblatthalbschale und der Hinterkantenabschlusssteg bestehen, in die Formhalbschale einzulegen und in einem gemeinsamen Infusionsprozess mit der Harzmatrix zu tränken. Es ist ebenfalls möglich, die Rotorblatthalbschale und/oder den Hinterkantenabschlusssteg ganz oder bereichsweise als Preform auszuführen und zusammen mit den übrigen Halbzeugen in die Formhalbschale einzulegen.

Eine Preform besteht aus trockenen Faserlagen und optional zusätzlichem Kernmaterial, wobei die Faserlagen und das Kernmaterial miteinander durch einen Klebstoff lösbar miteinander verbunden sind, wobei eine anschließende Infusion der Harzmatrix möglich ist.

In einer besonders bevorzugten Ausführungsform des erfindungsgemäßen Verfahrens wird entlang der Rotorblatthalbschalenhinterkante und unmittelbar auf das zweite Kernmaterial und unmittelbar auf die Rotorblatthalbschalenhinterkante ein drittes Kernmaterial angeordnet, dessen spezifische Dichte vorzugsweise einen höheren Wert hat als den der ersten und zweiten spezifischen Dichte. Um den Übergang zwischen Rotorblatthalbschale und Hinterkantenabschlusssteg zusätzlich zu stabilisieren, wird vorzugsweise innen auf die direkte Kontaktlinie zwischen Hinterkantenabschlusssteg und Rotorblatthalbschale das dritte Kernmaterial angeordnet; das dritte Kernmaterial ist in das Laminat des Rotorblattes integriert und wird innenseitig von der Innenhaut des Rotorblattes mitüberzogen und erhöht durch seine Anordnung die Festigkeit im Übergangsbereich zwischen Rotorblatthalbschale und Hinterkantenabschlusssteg.

In entsprechender Weise kann in einer weiteren bevorzugten Ausführungsform des erfindungsgemäßen Verfahrens zusätzlich oder stattdessen auch außen entlang der Rotorblatthinterkante und unmittelbar auf das zweite Kernmaterial und auf die Rotorblatthalbschalenhinterkante ein viertes Kernmaterial angeordnet werden. Die spezifische Dichte des vierten Kernmaterials hat vorzugsweise einen noch höheren Wert als den der ersten, zweiten und auch dritten spezifischen Dichte.

Insbesondere an der Außenseite des Übergangsbereiches wirken hohe Belastungen auf die Rotorblattschale, sodass durch die Verwendung einer besonders hohen Dichte eine besondere Festigkeit erzielt wird. Es ist vorzugsweise vorgesehen, dass das vierte Kernmaterial aus einer Epoxidharzleiste besteht, die passgenau in eine dreieckige Aussparung zwischen zweitem Kernmaterial und Rotorblatthinterkante eingepasst wird.

Das dritte und das vierte Kernmaterial können sich über die gesamte Längsausdehnung des Übergangsbereichs zwischen Rotorblatthalbschale und Hinterkantenabschlusssteg erstrecken.

Vorzugsweise wird das vierte Kernmaterial entlang eines Hinterkantengurtes angeordnet und günstigerweise wird das vierte Kernmaterial entlang seiner Erstreckung den Hinterkantengurt berührend angeordnet.

Die Erfindung wird anhand von zwei Ausführungsbeispielen in zwei Figuren beschrieben. Dabei zeigen:
- Fig. 1: Schnittansicht eines Bereichs einer Rotorblattschale im Bereich zwischen einer Rotorblatthalbschale und einem Hinterkantenabschlusssteg in einer ersten Ausführungsform,
- Fig. 2: Schnittansicht eines Bereichs der Rotorblattschale im Bereich zwischen der Rotorblatthalbschale und dem Hinterkantenabschlusssteg in einer zweiten Ausführungsform.

Die erfindungsgemäßen Rotorblätter werden vorzugsweise im Wesentlichen aus zwei Rotorblatthalbschalen, die separat vorgefertigt werden, zusammengesetzt. Allerdings können auch zusätzliche Bauteile, wie Hauptgurte und Hauptstege oder ähnliche zusätzlich in den Innenraum des Rotorblattes eingebaut werden. Auch diese können als separate Bauteile zur Verfügung gestellt werden.

Erfindungsgemäß wird die saug- bzw. druckseitige Rotorblatthalbschale 1 jeweils zusammen mit einem Abschnitt eines Hinterkantenabschlussstegs 2 jeweils einteilig vorgefertigt.

Rotorblätter können in einem Querschnitt senkrecht zu ihrer Längsrichtung L nicht nur eine schmal zulaufende Hinterkante aufweisen, sondern in anderen Ausführungsformen von Rotorblättern auch durch einen Hinterkantenabschlusssteg 2 gleichsam abgeschnitten sein. Der Hinterkantenabschlusssteg 2 beginnt dabei in Längsrichtung L des Rotorblattes vorzugsweise am wurzelseitigen Ende des Rotorblattes, er kann aber auch in einem Abstand dazu beginnen und erstreckt sich vorzugsweise bis in den Bereich zwischen 30 % und 50 % der Rotorblattlänge.

Der Hinterkantenabschlusssteg 2 schließt einen Innenraum des Rotorblattes zur Hinterkante hin vorzugsweise vollständig ab.

Eine Höhe des Hinterkantenabschlussstegs 2 ist über die Länge des Rotorblattes variabel. Die separaten Bauteile werden in für sie individuell bestimmten Herstellungsformen gefertigt. In die Herstellungsform werden zunächst mehrere Schichten, beispielsweise faserhaltige Gewebelagen, faserhaltige Gelegelagen, Schäume, Balsa usw., übereinander- und/oder nebeneinandergelegt. Die so angeordneten Schichten bilden ein vorzugsweise trockenes Halbzeug aus. Das Halbzeug wird in Verfahren, wie beispielsweise Resin Injection Moulding (RIM-Verfahren) oder Resin Transfer Moulding (RTM-Verfahren), mit einem Harzsystem infundiert. Das Harzsystem härtet in einer zunächst exothermen chemischen Reaktion und anschließender Wärmezufuhr innerhalb des Halbzeugs aus. Dem harzgetränkten Halbzeug wird, nachdem es in der exothermen Reaktion einen sogenannten exothermen Peak durchschritten hat, extern Wärme zugeführt, um es auf einer geeigneten Prozesstemperatur zu halten. Auf der Prozesstemperatur härtet das Harzsystem dann vollständig aus und vernetzt.

Üblicherweise werden die Halbzeuge zum Bau der Rotorblatthalbschale in der vorgegebenen Schichtung auf den Innenseiten von Formhalbschalen positioniert und nach der vollständigen Schichtung mit einer Vakuumfolie an Rändern der Formhalbschale abgedichtet. Die Vakuumfolie und/oder Formhalbschale weist mehrere Zuführungen und Abführungen auf, durch die das flüssige Harzsystem in das Halbzeug hineingesogen werden kann. Bei dem Harzsystem handelt es sich vorzugsweise um ein Duroplast-Harzsystem wie Epoxidharze, Polyesterharze, Vinylesterharze oder Polyurethanharze.

Üblicherweise werden die Bauteile als Laminatbauteile in einer Sandwichbauweise gefertigt und zur Verfügung gestellt. Unter einer Sandwichbauweise wird hier eine Bauweise eines Bauteils verstanden, das in einem Querschnitt ein Innenlaminat und ein Außenlaminat aufweist, die die Innenhaut bzw. die Außenhaut nach der Aushärtung ausbilden. Bei dem Innen- und Außenlaminat handelt es sich üblicherweise um mit einem Harzsystem getränkte Gewebe- und/oder Gelegelagen aus Glasfasern, Kohlenstofffasern oder anderen Fasern.

Zwischen der Innen- und Außenhaut ist ein Sandwichkern vorgesehen, der aus einem synthetischen Schaum oder Balsaholz besteht und hier in einer bevorzugten Ausführung einen synthetischen Schaum aufweist. Dabei kann ein Sandwichkern unterschiedliche Schaumarten umfassen und bereichsweise aus unterschiedlichen Schaumarten ausgebildet sein. Bei den Schäumen kann es sich um PVC-, SAN- oder Polyurethan-Schäume, die Anteile von Balsaholz aufweisen können, handeln. Es kann sich aber auch um Schäume wie Polystyrol, beispielsweise *Compaxx 90* der Firma Dow Chemical handeln.

Erfindungswesentlich ist an der Konstruktion, dass im Hinterkantenabschlusssteg 2 verwendeter zweiter Schaum 4 im Bereich des Überganges zur Rotorblatthalbschale 1 eine höhere Dichte aufweist als erster Schaum 3 in einem entlang einer Höhe H gesehen mittleren Bereich des Hinterkantenabschlussstegs 2. Der zweite Schaum 4 zieht sich entlang des Kontaktbereichs zwischen Hinterkantenabschlusssteg 2 und Rotorblatthalbschale 1.

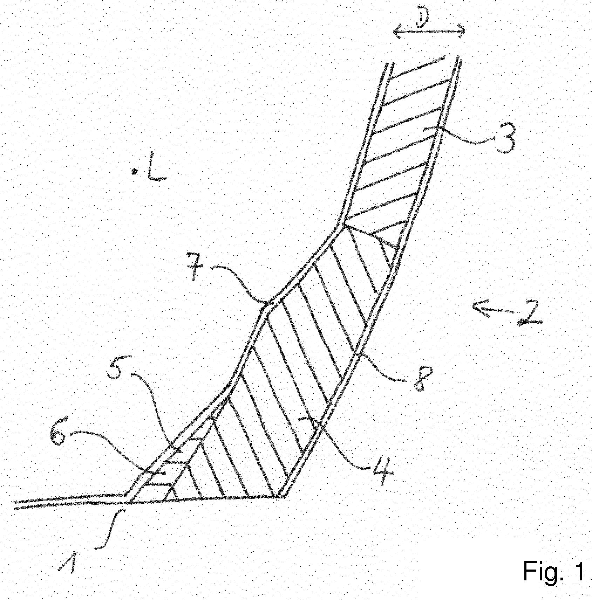

Fig. 1 zeigt Kernmaterialien 3, 4, 6 im Querschnitt des Hinterkantenabschlussstegs 2. ein erstes Kernmaterial 3 weist bei der Verwendung von PVC-Schaum eine erste spezifische Dichte im Bereich von 60 kg/m³ und bei der Verwendung von PET-Schaum von ca. 100 kg/m³, jeweils mit einer Schwankungsbreite von ± 20 kg/m³, auf. Von dem ersten Kernmaterial 3 ist nur ein Teil dargestellt. Der gesamte mittlere Bereich, der durch den ersten Schaum 3 bestimmt ist, kann sich in Fig.1 nach oben hin weiter fortsetzen und sich bis zu einem zweiten Schaum 4, der an die andere, nicht dargestellte Rotorblatthalbschale grenzt, erstrecken.

Bei der Angabe der spezifischen Dichte handelt es sich um das spezifische Gewicht des Schaumes pro Kubikmeter, also das Gewicht des Schaumes pro Kubikmeter nach dessen Aufschäumen, aber bevor das Laminatbauteil und damit der aufgeschäumte erste Schaum 3 im Infusionsverfahren mit Harz getränkt wurden.

Zwischen der Rotorblatthalbschale 1 und dem ersten Schaum 3 ist ein Streifen des zweiten Schaums 4 vorgesehen, der eine deutlich höhere spezifische Dichte, nämlich von größer als 200 kg/m³, vorzugsweise größer als 300 kg/m³ aufweist. Auch hier bezieht sich die Angabe der spezifischen Dichte auf den aufgeschäumten Schaum vor der Harzinfusion. Der Hinterkantenabschlusssteg 2 weist im Bereich des ersten Schaumes 3 eine erste Dicke D auf. In Richtung der Rotorblatthalbschale 1, d. h. in Fig. 1 in Richtung des unteren Endes der Fig. 1, nimmt eine Dicke D des Hinterkantenabschlussstegs 2 vorzugsweise zunächst konisch zu, um dann ein Stück weit in Richtung der Rotorblatthalbschale 1 eine gleichbleibende zweite Dicke D aufzuweisen, die vorzugsweise aber größer als die erste Dicke D ist.

In einem Streifen entlang des zweiten hochdichten Schaums 4 ist eine im Querschnitt dreiecksförmige Innenleiste 5, den zweiten Schaum 4 mit der Rotorblatthalbschale 1 verbindend, vorgesehen. Die Innenleiste 5 weist ein Kernmaterial aus einem dritten Schaum 6 auf. Der dritte Schaum 6 ist noch dichter als der erste und der zweite Schaum 3, 4. Die Innenleiste 5 kann aber auch aus einer reinen Epoxidharzleiste bestehen. Die Innenleiste 5 ist passgenau auf die Innenseite des zweiten Schaumes 4 angeordnet. Sie erstreckt sich entlang der gesamten Längsausdehnung des Hinterkantenabschlussstegs 2 vorzugsweise in dem Bereich, in dem der Winkel zwischen der Rotorblatthalbschale 1 und dem Hinterkantenabschlusssteg 2 deutlich kleiner als 180° wird.

Innenseitig auf den ersten Schaum 3, den zweiten Schaum 4, die Innenleiste 5 sowie das Halbzeug der Rotorblatthalbschale 1 sind die Lagen einer Innenhaut 7 aufgebracht. Bei der Innenhaut 7 kann es sich um Gewebe- und/oder Gelegelagen, die Glasfasern, Kohlenstoffasern oder andere Fasern enthalten, handeln. Vorab werden auf die Formhalbschale die Lagen einer Außenhaut 8 aufgebracht; auch dabei kann es sich um Gewebe- und/oder Gelegelagen, die Glasfasern, Kohlenstoffasern oder andere Fasern enthalten, handeln. Nach Anordnung des Halbzeugs einschließlich Außen- und Innenhaut 8, 7 auf der Innenseite der Formhalbschale, wird die Anordnung innenseitig mit einer Vakuumfolie abgedichtet und mit einem Harzsystem, wie eingangs genannt, infundiert. Nach Aushärten des Bauteils wird die Rotorblatthalbschale 1 mit einem ihr zugeordneten Teil des Hinterkantenabschlussstegs 2 mit einer korrespondierenden Rotorblatthalbschale mit einem ihr zugeordneten korrespondierenden Teil des Hinterkantenabschlussstegs 2 zum Rotorblatt mit dem Hinterkantenabschlusssteg zusammengeklebt.

Zum einen weist der Hinterkantenabschlusssteg 2 im Bereich des zweiten Kernmaterials, beispielsweise des zweiten Schaums 4, einen Übergangsbereich auf, in dem die Dicke D des zweiten Kernmaterials, beispielsweise des zweiten Schaums 4, von der Dicke D des ersten Kernmaterials, beispielsweise des ersten Schaumes 3, auf die gewünschte, vorzugsweise größere Dicke D des zweiten Kernmaterials ansteigt. Das zweite Kernmaterial weist einen Bereich auf, in dem die Dicke D des zweiten Kernmaterials im Wesentlichen konstant bleibt. Die Dicke D des zweiten Kernmaterials ist vorzugsweise höher als diejenige des ersten Kernmaterials.

Durch die zur Rotorblatthalbschale 1 hin zunehmende Dicke D des Hinterkantenabschlussstegs 2 können die an den Übergangsstellen zwischen Rotorblatthalbschale 1 und Hinterkantenabschlusssteg 2 auftretenden sehr hohen Belastungen besser aufgenommen werden, und es kann eine Konstruktion mit besonders hoher Festigkeit, insbesondere gegenüber Biegebelastungen, zur Verfügung gestellt werden. Diesem Ziel dient auch der Einsatz des hochdichten Kernmaterials in diesem Bereich.

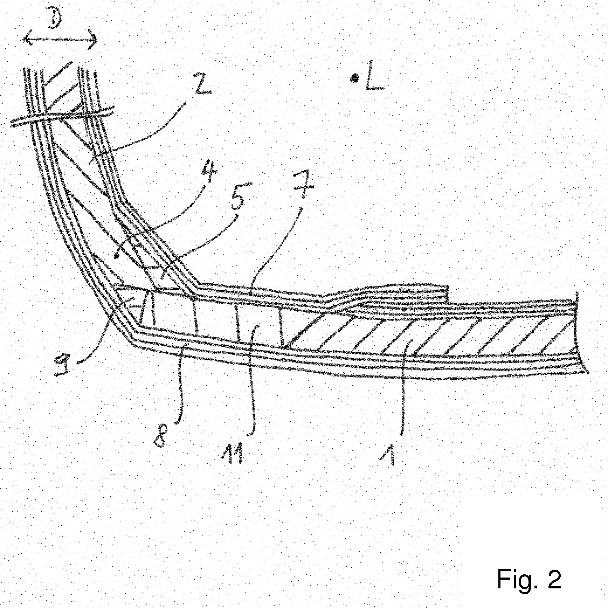

In Fig. 2 ist eine andere Ausführungsform des Bereichs zwischen Rotorblatthalbschale 1 und Hinterkantenabschlusssteg 2 dargestellt. Dabei ist auch der Aufbau der Rotorblatthalbschale 1 dargestellt, die in einer Sandwichbauweise hergestellt ist, wobei der Sandwichkern aus einem Kernmaterial mit einem synthetischen Schaum besteht, der bei der Verwendung von PVC-Schaum günstigerweise ebenfalls eine Dichte von etwa 60 kg/m³ ± 20 kg/m³ aufweist, bzw. aus Balsaholz.

Direkt an der Rotorblatthinterkante ist ein Hinterkantengurt 11 in Längsrichtung L des Rotorblattes verlaufend angeordnet. Der Hinterkantengurt 11 ist aus über die gesamte Dicke D der Rotorblatthalbschale angeordneten Gewebe- und/oder Gelegelagen konstruiert, die als Halbzeug übereinandergeschichtet werden und in einem Infusionsverfahren mit dem Harzsystem getränkt werden. Der Hinterkantengurt weist vorzugsweise eine Hauptfaserrichtung entlang der Längsrichtung L des Rotorblattes auf. Der Hinterkantengurt 11 ist gegenüber Zugbelastungen in Längsrichtung L deutlich stabiler als der übrige Sandwichbereich der Rotorblatthalbschale 1. Direkt am Hinterkantengurt 11 als Teil der Rotorblatthalbschale 1 anschließend ist der Hinterkantenabschlusssteg 2 anlaminiert. Der Hinterkantenabschlusssteg 2 weist, wie in der erstgenannten Ausführungsform, zunächst im Bereich beabstandet von der Rotorblatthalbschale 1, ein Kernmaterial einer Standarddichte auf, während in einem Bereich, der sich der Rotorblatthalbschale 1 anschließt, ein Kernmaterial mit einer höheren Dichte verwendet wird. In beiden Fällen handelt es sich vorzugsweise um Schäume. Der Standardschaum weist bei der Verwendung von PVC-Schaum eine Dichte von etwa 60 kg/m³ ± 20 kg/m³ auf, der hochdichte Schaum eine Dichte von 200 - 300 kg/m3, vorzugweise sogar höhere Dichten auf.

Der Hinterkantengurt 11 kann in einem Querschnitt senkrecht zur Längsrichtung L etwas bogenförmig nach außen ausgeformt sein und stellt im Wesentlichen einen rechteckigen Querschnitt dar.

An dem Kontaktbereich zwischen Hinterkantenabschlusssteg 2 und Rotorblatthalbschale 1 weist das Rotorblatt zum einen die oben genannte im Querschnitt dreiecksförmige Innenleiste 5 aus einem Material mit einer dritten spezifischen Dichte auf, wobei die dritte spezifische Dichte vorzugsweise höher als die erste und zweite spezifische Dichte ist.

Eine im Querschnitt dreiecksförmige Außenleiste 9 ist entlang der Außenseite der Kontaktlinie zwischen Hinterkantenabschlusssteg 2 und Rotorblatthalbschale 1 angeordnet. Die Außenleiste 9 weist eine vierte spezifische Dichte auf. Die Rotorblatthabschale 1 schließt hinten mit dem Hinterkantengurt 11 ab. Bei der Außenleiste 9 kann es sich ebenfalls um eine Leiste aus einem ausgehärteten Epoxidharz handeln. Die Innen- und Außenleiste 5, 9 werden vor dem Infusionsvorgang formschlüssig in das Halbzeug der Rotorblatthalbschale 1 und des Hinterkantenabschlussstegs 2 eingebettet und mit der Innenhaut 7 und der Außenhaut 8 beschichtet. Durch das Infusionsverfahren wird das Halbzeug mit dem Kernmaterial des Hinterkantenabschlussstegs 2 und den Innen- und Außenleisten 5, 9 miteinander zu einem Laminat verklebt und ausgehärtet. Die Übergangsstelle zwischen Hinterkantenabschlusssteg 2 und Rotorblatthalbschale 1 ist zum einen durch die an der Kontaktstelle größer werdende Dicke D des Hinterkantenabschlussstegs 2 aufgrund der zum einen möglicherweise größeren Dicke D des Kernmaterials des Hinterkantenabschlussstegs 2, zum anderen auch aufgrund des Einbringens der Innenleiste 5 und der Außenleiste 9 stabiler, zum anderen wird die Klebverbindung stabiler, weil das Kernmaterial eine höhere durchschnittliche Dichte aufweist, als in Bereichen, die von der Kontaktstelle zwischen Hinterkantenabschlusssteg 2 und Rotorblatthalbschale 1 weiter entfernt sind.

### Bezugszeichenliste

- 1: Rotorblatthalbschale
- 2: Hinterkantenabschlusssteg
- 3: erster Schaum
- 4: zweiter Schaum
- 5: Innenleiste
- 6: dritter Schaum
- 7: Innenhaut
- 8: Außenhaut
- 9: Außenleiste
- 11: Hinterkantengurt

- L: Längsrichtung
- D: Dicke
- H: Höhe

## Patentansprüche

1. Rotorblatt für eine Windenergieanlage mit einem Hinterkantenabschlusssteg (2) der zwischen einer saugseitigen und einer druckseitigen Rotorblatthalbschale (1) angeordnet ist,
**dadurch gekennzeichnet, dass** der Hinterkantenabschlusssteg (2) als Laminatbauteil in einer Sandwichbauweise ausgebildet ist mit einem ersten Kernmaterial (3), das eine erste spezifischen Dichte aufweist und einem sich entlang eines Übergangsbereichs zwischen dem Hinterkantenabschlusssteg (2) und der Rotorblatthalbschale (1) angeordneten zweiten Kernmaterial (4), das eine zweite spezifische Dichte aufweist, und die zweite spezifische Dichte ist größer als die erste spezifische Dichte.

2. Rotorblatt nach Anspruch 1,
**dadurch gekennzeichnet, dass** die zweite spezifische Dichte einen Wert größer als 200 kg/m³ hat.

3. Rotorblatt nach Anspruch 2,
**dadurch gekennzeichnet, dass** die zweite spezifische Dichte einen Wert von größer als 300 kg/m³ hat.

4. Rotorblatt nach Anspruch 1, 2 oder 3,
**dadurch gekennzeichnet, dass** die erste spezifische Dichte einen Wert von 60 kg/m³ ±20kg/m³ hat, wenn ein PET-Schaum eingesetzt wird, und wenn ein PVC Schaum eingesetzt wird, einen Wert von 100 kg/m³ ±20kg/m³.

5. Rotorblatt nach einem der vorstehenden Ansprüche,
**dadurch gekennzeichnet, dass** an einer Innenseite des Rotorblattes entlang des Übergangsbereiches zwischen der Rotorblatthalbschale (1) und dem Hinterkantenabschlusssteg (2) eine Innenleiste (5) mit einem dritten Kernmaterial (6) mit einer dritten spezifischen Dichte verläuft, die mit der Rotorblatthalbschale (1) und dem Hinterkantenabschlusssteg (2) zusammenlaminiert ist.

6. Rotorblatt nach Anspruch 5,
**dadurch gekennzeichnet, dass** die dritte spezifische Dichte vor der Laminierung einen gleichen oder höheren Wert als die zweite spezifische Dichte aufweist.

7. Rotorblatt nach einem der vorstehenden Ansprüche,
**dadurch gekennzeichnet, dass** an einer Außenseite des Rotorblattes entlang des Übergangsbereiches eine Außenleiste (9) mit einer vierten spezifischen Dichte angeordnet ist, die höher als die erste, zweite und dritte spezifische Dichte ist.

8. Rotorblatt nach Anspruch 7,
**dadurch gekennzeichnet, dass** entlang der Hinterkanten beider Rotorblatthalbschalen (1) ein Hinterkantengurt (11) verläuft und das zweite Kernmaterial (4) und /oder das dritte Kernmaterial (6) unmittelbaren Kontakt mit dem Hinterkantengurt (11) aufweisen.

9. Verfahren zur Herstellung eines Rotorblattes mit einem Hinterkantenabschlusssteg (2) einer Windenergieanlage, indem
in einem sich entlang einer Rotorblatthalbschalenhinterkante erstreckenden Übergangsbereich zwischen dem Hinterkantenabschlusssteg (2) und einer Rotorblatthalbschale (1) ein zweites Kernmaterial (4) mit einer zweiten spezifischen Dichte angeordnet wird,
entlang des zweiten Kernmaterials (4) auf einer der Rotorblatthalbschale (1) gegenüberliegenden Seite ein erstes Kernmaterial (3) mit einer ersten spezifischen Dichte angeordnet wird und die zweite spezifische Dichte größer als die erste spezifische Dichte gewählt wird.

10. Verfahren nach Anspruch 9,
**dadurch gekennzeichnet, dass** die gesamte Anordnung der Halbzeuge in der Rotorblatthalbschale (1) und dem Hinterkantenabschlusssteg (2) inklusive des ersten und zweiten Kernmaterials (3, 4) und einer Innenleiste (5) und einer Außenleiste (9) mit einem Duroplast-Harzsystem infundiert wird.

11. Verfahren nach Anspruch 9 oder 10,
**dadurch gekennzeichnet, dass** eine saug- und eine druckseitige Rotorblatthalbschale (1) mit dem Hinterkantenabschlusssteg (2) miteinander verbunden werden.

12. Verfahren nach Anspruch 10,
**dadurch gekennzeichnet, dass** in eine Formhalbschale Außenlagen und Innenlagen, das erste und zweite Kernmaterial (3, 4) des Hinterkantenabschlussstegs (2) und die Innenleiste (5) und die Außenleiste (9) gelegt werden.

13. Verfahren nach einem der Ansprüche 9 bis 12,
**dadurch gekennzeichnet, dass** innen entlang der Rotorblatthalbschalenhinterkante und unmittelbar auf das zweite Kernmaterial (4) und auf die Rotorblatthalbschalenhinterkante ein drittes Kernmaterial (6) angeordnet wird, dessen spezifische Dichte einen höheren Wert hat als den der ersten und einen gleichen oder höheren Wert hat als den der zweiten spezifischen Dichte.

14. Verfahren nach den Ansprüchen 10 und 13,
**dadurch gekennzeichnet, dass** außen entlang der Rotorblatthalbschalenhinterkante und unmittelbar auf das zweite Kernmaterial (4) und auf die Rotorblatthalbschalenhinterkante die Außenleiste (9) angeordnet wird, deren spezifische Dichte einen höheren Wert hat als den der ersten, zweiten und dritten spezifischen Dichte.

15. Verfahren nach Anspruch 14,
**dadurch gekennzeichnet, dass** ein viertes Kernmaterial der Außenleiste (9) aus einem Epoxidharz oder einem Polyurethanharz besteht.

## Claims

1. Rotor blade for a wind turbine with a trailing edge termination flange (2) which is arranged between a rotor blade half-shell (1) on the suction side and a rotor blade half-shell on the pressure side, **characterised in that** the trailing edge termination flange (2) is constructed as a laminate component in a sandwich construction with a first core material (3) which has a first specific density and a second core material (4) which is arranged along a transition region between the trailing edge termination flange (2) and the rotor blade half-shell (1) and has a second specific density, and the second specific density is greater than the first specific density.

2. Rotor blade according to claim 1, **characterised in that** the second specific density has a value greater than 200 kg/m³.

3. Rotor blade according to claim 2, **characterised in that** the second specific density has a value greater than 300 kg/m³.

4. Rotor blade according to claim 1, 2 or 3, **characterised in that** the first specific density has a value of 60 kg/m³ ±20kg/m³ when a PET foam is used and a value of 100 kg/m³ ±20kg/m³ when a PVC foam is used.

5. Rotor blade according to one of the preceding claims, **characterised in that** on an inner face of the rotor blade an inner strip (5), which has a third core material (6) with a third specific density and is laminated together with the rotor blade half-shell (1) and the trailing edge termination flange (2), extends along the transition region between the rotor blade half-shell (1) and the trailing edge termination flange (2).

6. Rotor blade according to claim 5, **characterised in that** the third specific density has a same or a higher value than the second specific density before the lamination.

7. Rotor blade according to one of the preceding claims, **characterised in that** an outer strip (9) with a fourth specific density which is higher than the first, second and third specific density is arranged on an outer face of the rotor blade along the transition region.

8. Rotor blade according to claim 7, **characterized in that** a trailing edge belt (11) extends along the trailing edges of both rotor blade half-shells (1) and the second core material (4) and/or the third core material (6) have direct contact with the trailing edge belt (11).

9. Method for producing a rotor blade with a trailing edge termination flange (2) of a wind turbine, by arranging a second core material (4) with a second specific density in a transition region between the trailing edge termination flange (2) and a rotor blade half-shell (1) extending along a rotor blade half-shell trailing edge,
a first core material (3) with a first specific density being arranged along the second core material (4) on a side opposite the rotor blade half-shell (1) and the second specific density is chosen to be greater than the first specific density.

10. Method according to claim 9, **characterised in that** the entire arrangement of the semi-finished products in the rotor blade half-shell (1) and the trailing edge termination flange (2) including the first and second core material (3, 4) and an inner strip (5) and an outer strip (9) is infused with a thermosetting plastic resin system.

11. Method according to claim 9 or 10, **characterised in that** a rotor blade half-shell (1) on the suction side and a rotor blade half-shell on the pressure side with a trailing edge termination flange (2) are connected to one another.

12. Method according to one of claims 9 to 11, **characterised in that** outer layers and inner layers, the first and second core material (3, 4) of the trailing edge termination flange (2) and the inner strip (5) and the outer strip (9) are placed in a mould half-shell.

13. Method according to one of claims 9 to 12, **characterised in that** a third core material (6), of which the specific density has a higher value than that of the first and has the same value or a higher value than that of the second specific density, is arranged internally along the rotor blade half-shell trailing edge and directly on the second core material (4) and on the rotor blade half-shell trailing edge.

14. Method according to one of claims 9 to 13, **characterised in that** the outer strip (9) of which the specific density has a higher value than that of the first, the second and the third specific density is arranged externally along the rotor blade half-shell trailing edge and directly on the second core material (4) and on the rotor blade half-shell trailing edge.

15. Method according to claim 14, **characterised in that** a fourth core material of the outer strip (9) is made from an epoxy resin or a polyurethane resin.

## Revendications

1. Pale de rotor pour une éolienne avec une entretoise de fermeture de bord arrière (2) qui est placée entre une demie coque de pale de rotor (1) côté aspiration et côté pression,
**caractérisée en ce que l'**entretoise de fermeture de bord arrière (2) est configurée comme un composant stratifié en construction en sandwich, avec un premier matériau de noyau (3) qui présente une première densité spécifique et un second matériau de noyau (4) placé le long d'une zone de transition entre l'entretoise de fermeture de bord arrière (2) et la demie coque de pale de rotor (1) qui présente une seconde densité spécifique et la seconde densité spécifique est plus grande que la première densité spécifique.

2. Pale de rotor selon la revendication 1, **caractérisée en ce que** la seconde densité spécifique a une valeur supérieure à 200 kg/m³.

3. Pale de rotor selon la revendication 2, **caractérisée en ce que** la seconde densité spécifique a une valeur supérieure à 300 kg/m³.

4. Pale de rotor selon la revendication 1, 2 ou 3, **caractérisée en ce que** la première densité spécifique a une valeur de 60 kg/m³ ± 20kg/m³ si une mousse de PET est utilisée et une valeur de 100 kg/m³ ± 20kg/m³ si une mousse de PVC est utilisée.

5. Pale de rotor selon l'une des revendications précédentes, **caractérisée en ce qu'**une baguette intérieure (5) avec un troisième matériau de noyau 6) avec une troisième densité spécifique se trouve sur un côté intérieur de la pale de rotor le long de la zone de transition entre la demie coque de pale de rotor (1) et l'entretoise de fermeture de bord arrière (2), baguette intérieure qui est stratifiée avec la demie coque de pale de rotor (1) et l'entretoise de fermeture de bord arrière (2).

6. Pale de rotor selon la revendication 5, **caractérisée en ce que** la troisième densité spécifique présente, avant la stratification, une valeur égale ou supérieure à la seconde densité spécifique.

7. Pale de rotor selon l'une des revendications précédentes, **caractérisée en ce qu'**une baguette extérieure (9) avec une quatrième densité spécifique qui est supérieure à la première, à la seconde et à la troisième densité spécifique est placée sur le côté extérieur de la pale de rotor le long de la zone de transition.

8. Pale de rotor selon la revendication 7, **caractérisée en ce qu'**une sangle de bord arrière (11) s'étend le long des bords arrière des deux demies coques de pale de rotor (1) et que le second matériau de noyau (4) et/ou le troisième matériau de noyau (6) présentent un contact direct avec la sangle de bord arrière (11).

9. Procédé pour la fabrication d'une pale de rotor avec une entretoise de fermeture de bord arrière (2) d'une éolienne, un second matériau de noyau (4) avec une seconde densité spécifique étant placé dans une zone de transition qui s'étend le long d'un bord arrière de demie coque de pale de rotor entre l'entretoise de fermeture de bord arrière (2) et une demie coque de pale de rotor (1), un premier matériau de noyau (3) avec une première densité spécifique étant placé le long du second matériau de noyau (4) sur un côté opposé à la demie pale de rotor (1) et la seconde densité spécifique étant sélectionnée supérieure à la première densité spécifique.

10. Procédé selon la revendication 9, **caractérisé en ce que** l'ensemble de l'arrangement des produits semi-finis dans la demie coque de pale de rotor (1) et l'entretoise de fermeture de bord arrière (2), y compris du premier et du second matériau de noyau (3, 4) et d'une baguette intérieure (5) et d'une baguette extérieure (9), est traité par infusion avec un système de résine thermodurcissable.

11. Procédé selon la revendication 9 ou 10, **caractérisé en ce qu'**une demie coque de pale de rotor côté aspiration et une demie coque de pale de rotor côté pression (1) sont reliées l'une à l'autre avec l'entretoise de fermeture de bord arrière (2).

12. Procédé selon l'une des revendications 9 à 11, **caractérisé en ce que** des couches extérieures et des couches intérieures, le premier et le second matériau de noyau (3, 4) de l'entretoise de fermeture de bord arrière (2) et la baguette intérieure (5) et la baguette extérieure (9) sont insérées dans une demie coque moulée.

13. Procédé selon l'une des revendications 9 à 12, **caractérisé en ce qu'**un troisième matériau de noyau (6) est placé à l'intérieur le long du bord arrière de la demie coque de pale de rotor et directement sur le second matériau de noyau (4) et sur le bord arrière de la demie pale de rotor, troisième matériau dont la densité spécifique a une valeur supérieure à celle de la première densité spécifique et une valeur égale ou supérieure à celle de la seconde densité spécifique.

14. Procédé selon l'une des revendications 9 à 13, **caractérisé en ce que** la baguette extérieure (9) est placée à l'extérieur le long du bord arrière de la demie coque de pale de rotor et directement sur le second matériau de noyau (4) et sur le bord arrière de la demie coque de pale de rotor, baguette extérieure dont la densité spécifique a une valeur supérieure à celle de la première, de la seconde et de la troisième densité spécifique.

15. Procédé selon la revendication 14, **caractérisé en ce qu'**un quatrième matériau de noyau de la baguette extérieure (9) est en une résine époxy ou une résine polyuréthane.
